# EUROPEAN PATENT SPECIFICATION

(11) **EP 3 477 161 B1**
(45) Date of publication and mention of the grant of the patent: **24.06.2020**
(21) Application number: 18202769.8
(22) Date of filing: 26.10.2018
(51) Int. Cl.: F16H 61/431, F16H 61/421, F16H 61/30

(54) **ELECTROHYDRAULIC ACTUATOR FOR HYDROSTATIC TRANSMISSION**
ELEKTROHYDRAULISCHER AKTUATOR ZUR HYDROSTATISCHEN ÜBERTRAGUNG
ACTIONNEUR ÉLECTROHYDRAULIQUE POUR TRANSMISSION HYDROSTATIQUE

(30) Priority: 31.10.2017 US 201715798749
(43) Date of publication of application: 01.05.2019
(73) Proprietor: Deere & Company, Moline, IL 61265 (US)
(72) Inventor: McCord, Christopher, 68163 Mannheim (DE); Claussen, Larry D., 68163 Mannheim (DE); Kruckeberg, John, 68163 Mannheim (DE); Panchakshar, Kannan, 68163 Mannheim (DE); Sprinkle, David L, 68163 Mannheim (DE)
(74) Representative: Lavall, Christian Henner

(56) References cited:
- US-A- 2 137 959
- US-A1- 2016 040 691
- US-A1- 2016 053 888
- US-B2- 6 581 710

## Description

The present invention relates to hydrostatic transmissions on work vehicles such as agricultural or utility tractors, and more specifically to an electrohydraulic actuator for a hydrostatic transmission (see US 6 581 710 B).

Work vehicles such as agricultural or utility tractors have mechanical linkages between forward and reverse foot pedals and the trunnion lever on a hydrostatic transmission. An electrohydraulic actuator is needed between the foot pedals and hydrostatic transmission of a work vehicle, which may be used instead of mechanical linkages, but without any additional supporting components. An electrohydraulic actuator is needed between the foot pedals and hydrostatic transmission of a work vehicle that is relatively low cost and allows other controller enabled features of an electronically controlled hydrostatic transmission such as cruise control, maximum speed settings, engine anti-stall, economy settings, user defined acceleration or deceleration profiles, automotive style throttle control, remote (out of seat) tractor control applications, and interlocks to prevent motion of the tractor under certain conditions. An electrohydraulic actuator is needed that is modular and allows a hydrostatic transmission to be substituted for an electronic transmission while using many of the same mechanical and electrical components on the tractor.

An electrohydraulic actuator for a hydrostatic transmission includes a piston in a cylinder, a centering spring urging the piston to a neutral traction drive position in the cylinder, a forward pressure control valve responsive to movement of a forward foot pedal to variably open a forward passage to provide hydraulic pressure on a first side of the piston, and a reverse pressure control valve responsive to movement of a reverse foot pedal to variably open a reverse passage to provide hydraulic pressure on a second side of the piston. A piston rod is provided between the piston and a joint. The joint is connected to a trunnion lever on the hydrostatic transmission that turns to a forward traction drive position if the piston slides in a first direction from neutral, and a reverse traction drive position if the piston slides in a second direction from neutral. An electronic controller is electrically connected to a pedal position sensor for the forward and reverse foot pedals. The electronic controller provides electrical signals to the forward and reverse pressure control valves based on pedal position. The electrohydraulic actuator may be used instead of mechanical linkages, does not require any additional supporting components, is relatively low cost, and allows other controller enabled features of an electronically controlled hydrostatic transmission. The electrohydraulic actuator is modular and allows a hydrostatic transmission to be easily substituted for an electronic transmission while using many of the same mechanical and electrical components on the tractor.
Fig. 1 is a side view of an electrohydraulic actuator for a hydrostatic transmission of a work vehicle according to a first embodiment.
Fig. 2 is a cross section view of an electrohydraulic actuator in a neutral position according to a first embodiment.
Fig. 3 is a cross section view of an electrohydraulic actuator in a forward position according to a first embodiment.
Fig. 4 is a cross section view of an electrohydraulic actuator in a reverse position according to a first embodiment.
Fig. 5 is a schematic view of an electrohydraulic actuator in a hydraulic circuit according to a first embodiment.

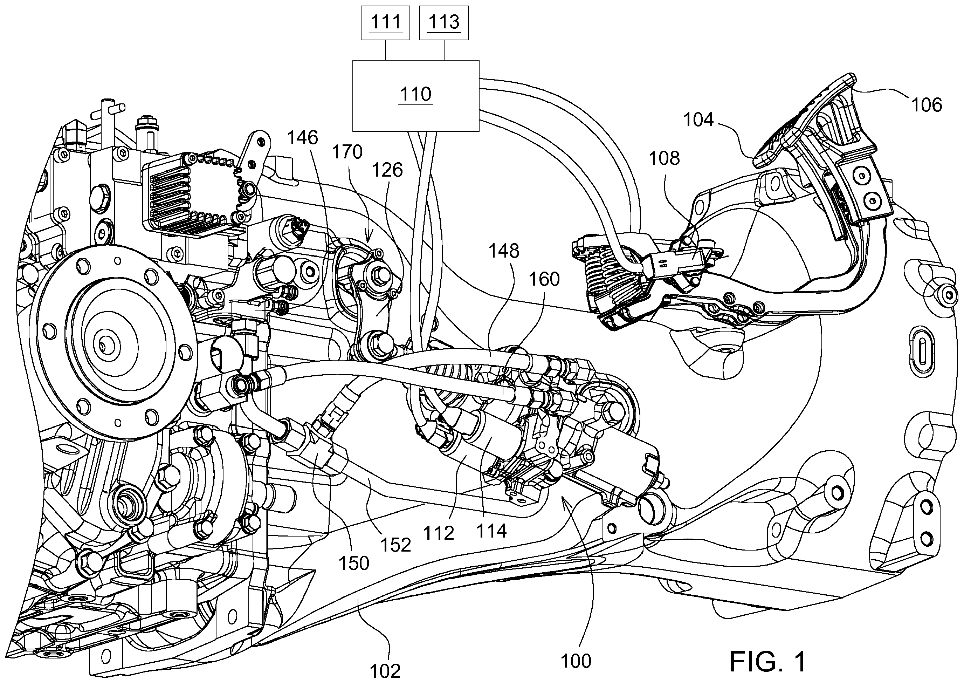

In a first embodiment shown in Figs. 1-5, electrohydraulic actuator 100 is modular and may be mounted to transmission housing 102 on a work vehicle such as an agricultural or utility tractor. The electrohydraulic actuator allows a hydrostatic transmission to be substituted for an electronic transmission while using many of the same mechanical and electrical components on the tractor. The electrohydraulic actuator may include at least one pressure control valve, and preferably a forward pressure control valve 112 and reverse pressure control valve 114. The forward and reverse pressure control valves may receive electrical signals from electronic controller 110 based in part on electrical signals the controller receives from pedal position sensor 108. Additionally, the electrical signals provided by the controller to the pressure control valves also may be based in part on commands from operator interface 111 for settings, modes or features such as maximum speed settings, engine anti-stall, economy settings, user defined acceleration or deceleration profiles, automotive style throttle control, remote (out of seat) tractor control applications, and interlocks to prevent motion of the tractor under certain conditions; and vehicle interlocks and state variables 113. The electrical signals from the pedal position sensor are based on pedal position or displacement of one or more foot pedals, such as forward and reverse foot pedals 104, 106. The forward and reverse pressure control valves may be electrically actuated pressure control valves that modulate hydraulic pressure so the electrohydraulic actuator may function with a wide range of system and implement pressures and speeds. The response of the electrohydraulic actuator is not limited to pedal position, but also based on controller logic from operator commands, vehicle interlocks and state variables.

In one embodiment, electrohydraulic actuator 100 may include piston 116 which moves in a first direction or a second direction in response to hydraulic pressure in cylinder 118. Forward and reverse pressure control valves 112, 114 may provide hydraulic pressure to the cylinder on each side of the piston. Piston rod 120 may extend through cylinder end cap 122 and connect a first end of the piston to joint 124. The joint may connect to trunnion lever 126 which may pivot a swash plate in hydrostatic transmission 170 to any forward or reverse traction drive position.

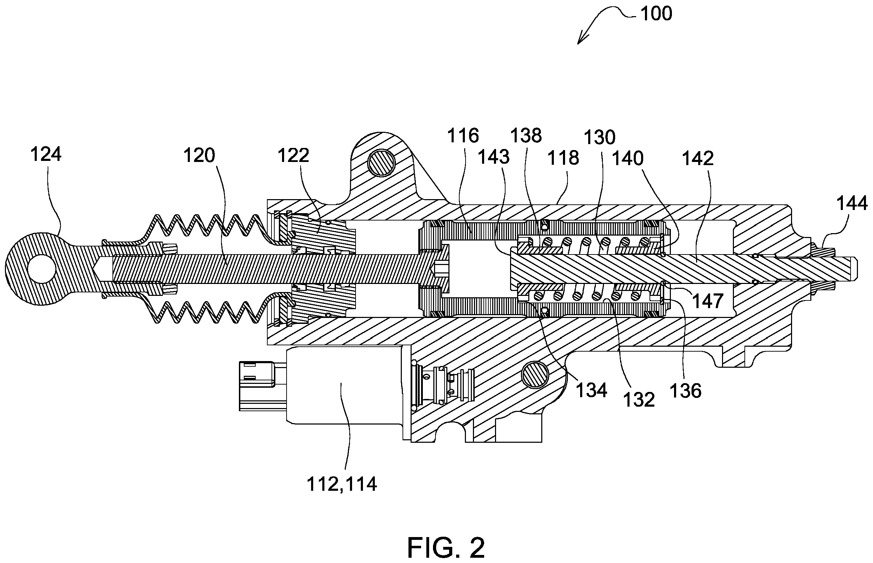

In one embodiment, as shown in Fig. 2, electrohydraulic actuator 100 may include centering spring 130 urging piston 116 to a neutral traction drive position. For example, the centering spring may bias the piston to the neutral traction drive position if controller 110 does not actuate forward or reverse pressure control valves 112, 114, hydraulic pressure is not provided to cylinder 118 on either side of the piston, or there is a loss of power. For example, centering spring may be positioned in piston bore 132. Center rod 142 may extend through the centering spring, and may be threaded to nut 144 or otherwise attached to a second end of the cylinder so that the center rod may be repositioned to adjust the neutral position of the piston. Collars 138, 140 may retain the ends of the centering spring relative to the center rod and the piston bore. Collar 138 may retain a first end of the centering spring, and collar 140 may retain a second end of the centering spring.

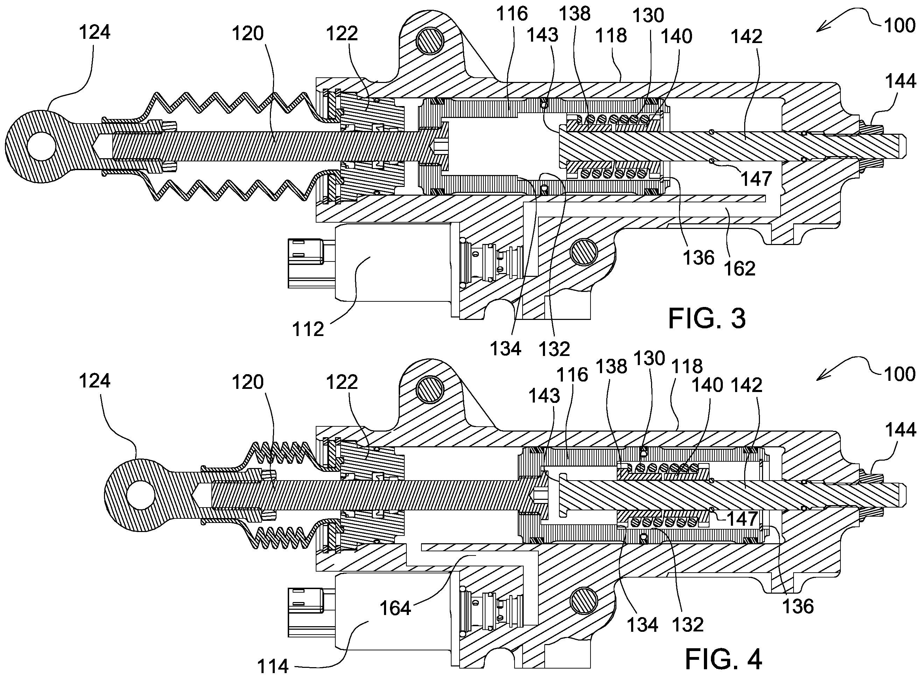

In one embodiment, electrohydraulic actuator 100 may include forward passage 162 between actuator pressure inlet line 148 and a first end of cylinder 118. Forward pressure control valve 112 may variably open the forward passage based on electrical signals from controller 110. When the forward pressure control valve opens the forward passage, hydraulic pressure may urge piston 116 to slide in a first direction from neutral, to the left in Fig. 3. This extends piston rod 120 and joint 124, and turns trunnion lever 126 to move the swash plate in hydrostatic transmission 170 to a forward traction drive position. As the piston slides to the left, centering spring 130 may be compressed between center rod head 143 and retaining ring 136.

In one embodiment, electrohydraulic actuator 100 may include reverse passage 164 between actuator pressure inlet line 148 and a second end of cylinder 118. Reverse pressure control valve 114 may variably open the reverse passage based on electrical signals from controller 110. When the reverse pressure control valve opens the reverse passage, hydraulic pressure may urge piston 116 to slide in second direction from neutral, to the right in Fig. 4. This retracts piston rod 120 and joint 124, and turns trunnion lever 126 to move the swash plate in hydrostatic transmission 170 to a reverse traction drive position. As the piston slides to the right, centering spring 130 may be compressed between internal shoulder 134 and ring 147 on center rod 142.

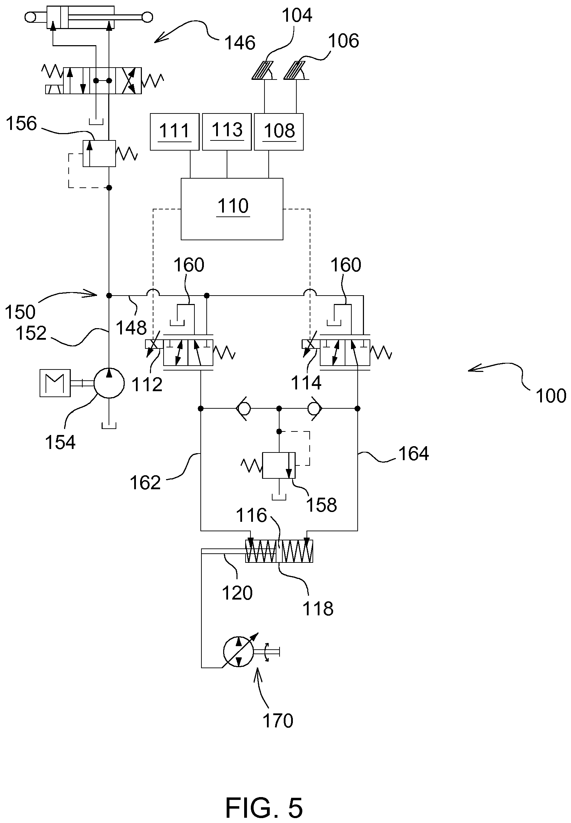

In one embodiment, as shown in Fig. 5, electrohydraulic actuator 100 may be connected directly to an existing implement hydraulic pressure circuit 146 on the work vehicle, such as a hitch or backhoe circuit. The electrohydraulic actuator does not require its own charge circuit. Instead, the electrohydraulic actuator may include actuator pressure inlet line 148 connected with a T connection 150 to implement pressure line 152 between vehicle implement pump 154 and minimum pressure valve 156. The electrohydraulic actuator also may include tank return line 160 to a sump, and relief valve 158 between the forward and reverse pressure control valves to protect the electrohydraulic actuator. Optionally, a pressure reducing valve also may be provided in actuator 100 just prior to pressure reducing valves 112 and 114. Electronic controller 110 may provide signals to the forward and reverse pressure control valves based on electrical input from forward and reverse pedals 104, 106 through pedal position sensor 108, from operator interface 111, and from vehicle state interlocks and variables 113.

In one embodiment, electrohydraulic actuator 100 also may provide position feedback to controller 110 as a logic input for gain scheduling of current to the forward and reverse pressure control valves. For example, a position sensing device on the piston rod or joint may be electrically connected to the controller. When the position sensing device indicates the piston rod or joint is approaching an end stop, the controller may reduce gains in electrical signals to the forward and reverse pressure control valves to gradually ease hydrostatic transmission 170 to an end stop position.

Having described the preferred embodiment, it will become apparent that various modifications can be made without departing from the scope of the invention as defined in the accompanying claims.

## Claims

1. An electro hydraulic actuator (100) for a hydrostatic transmission (102), comprising:
a piston (116) in a cylinder (118);;
a forward pressure control valve (112) responsive to movement of a forward foot pedal (104) to variably open a forward passage (162) to provide hydraulic pressure on a first side of the piston (116);
a reverse pressure control valve (114) responsive to movement of a reverse foot pedal (106) to variably open a reverse passage (164) to provide hydraulic pressure on a second side of the piston (116); and
a pedal position sensor (108) providing electrical signals to an electronic controller (110) that selectively actuates the pair of pressure control valves (112, 114);
**characterized by** a piston rod (120) between the piston (116) and a joint (124); the joint (124) connected to a trunnion lever (126) on the hydrostatic transmission (102) that turns to a forward traction drive position if the piston (116) slides in a first direction from the neutral traction drive position, and a reverse traction drive position if the piston (116) slides in a second direction from the neutral traction drive position, and
a centering spring (130) urging the piston (116) to a neutral traction drive position in the cylinder (118).

2. The electrohydraulic actuator (100) for a hydrostatic transmission (102) of claim 1 wherein the electrohydraulic actuator (100) is connected to an implement hydraulic circuit.

3. The electrohydraulic actuator (100) for a hydrostatic transmission (102) of claim 1, the electronic controller (110) providing electrical signals to the forward and reverse pressure control valves (112, 114) based at least in part on pedal position.

4. The electrohydraulic actuator (100) for a hydrostatic transmission (102) of claim 3 wherein the electrical signals to the forward and reverse pressure control valves (112, 114) are based at least in part on a setting in the controller (110) for speed, power or acceleration.

5. The electrohydraulic actuator (100) for a hydrostatic transmission (102) of claim 3 wherein the electrical signals to the forward and reverse pressure control valves (112, 114) are based at least in part on an interlock in the controller (110) that prevents motion of the tractor under certain conditions.

6. The electrohydraulic actuator (100) for a hydrostatic transmission (102) of claim 1 wherein the centering spring (130) is inside a bore (132) of the piston (116).

7. The electrohydraulic actuator (100) for a hydrostatic transmission (102) of claim 1 further comprising a center rod (142) attached to an end of the cylinder (118) and extending at least partially through the piston (116); the center rod (142) being repositionable to change the neutral traction drive position of the piston (116).

8. The electrohydraulic actuator (100) for a hydrostatic transmission (102) of claim 1 wherein the electrohydraulic actuator (100) is modular and attached to an outer surface of a transmission housing.

## Patentansprüche

1. Elektrohydraulischer Aktuator (100) für ein hydrostatisches Getriebe (102), Folgendes umfassend:
einen Kolben (116) in einem Zylinder (118),
ein Vorwärtsdrucksteuerventil (112), das auf eine Bewegung eines Vorwärtsfußpedals (104) reagiert, um variabel einen Vorwärtsdurchlass (162) zu öffnen, um Hydraulikdruck an einer ersten Seite des Kolbens (116) bereitzustellen,
ein Rückwärtsdrucksteuerventil (114), das auf eine Bewegung eines Rückwärtsfußpedals (106) reagiert, um variabel einen Rückwärtsdurchlass (164) zu öffnen, um Hydraulikdruck an einer zweiten Seite des Kolbens (116) bereitzustellen, und
einen Pedalpositionssensor (108), der elektrische Signale für eine elektronische Steuerung (110) bereitstellt, die das Paar aus Drucksteuerventilen (112, 114) wahlweise betätigt,
**gekennzeichnet durch** eine Kolbenstange (120) zwischen dem Kolben (116) und einem Anschlussstück (124), wobei das Anschlussstück (124) mit einem Drehzapfenhebel (126) an dem hydrostatischen Getriebe (102) verbunden ist, der sich in eine Vorwärtstraktionsantriebsposition dreht, wenn der Kolben (116) von der neutralen Traktionsantriebsposition in eine erste Richtung gleitet, und in eine Rückwärtstraktionsantriebsposition, wenn der Kolben (116) von der neutralen Traktionsantriebsposition in eine zweite Richtung gleitet, und durch eine Zentrierfeder (130), die den Kolben (116) in eine neutrale Traktionsantriebsposition in dem Zylinder (118) zwingt.

2. Elektrohydraulischer Aktuator (100) für ein hydrostatisches Getriebe (102) nach Anspruch 1, wobei der elektrohydraulische Aktuator (100) mit einem Arbeitsgeräthydraulikkreis verbunden ist.

3. Elektrohydraulischer Aktuator (100) für ein hydrostatisches Getriebe (102) nach Anspruch 1, wobei die elektronische Steuerung (110) elektrische Signale für das Vorwärts- und das Rückwärtsdrucksteuerventil (112, 114) zumindest teilweise auf der Pedalposition basierend bereitstellt.

4. Elektrohydraulischer Aktuator (100) für ein hydrostatisches Getriebe (102) nach Anspruch 3, wobei die elektrischen Signale für das Vorwärts- und das Rückwärtsdrucksteuerventil (112, 114) zumindest teilweise auf einer Einstellung in der Steuerung (110) für Drehzahl, Leistung oder Beschleunigung basieren.

5. Elektrohydraulischer Aktuator (100) für ein hydrostatisches Getriebe (102) nach Anspruch 3, wobei die elektrischen Signale für das Vorwärts- und das Rückwärtsdrucksteuerventil (112, 114) zumindest teilweise auf einer Verriegelung in der Steuerung (110) basieren, die eine Bewegung des Traktors unter bestimmten Bedingungen verhindert.

6. Elektrohydraulischer Aktuator (100) für ein hydrostatisches Getriebe (102) nach Anspruch 1, wobei sich die Zentrierfeder (130) im Inneren einer Bohrung (132) des Kolbens (116) befindet.

7. Elektrohydraulischer Aktuator (100) für ein hydrostatisches Getriebe (102) nach Anspruch 1, ferner eine Zentrierstange (142) umfassend, die an einem Ende des Zylinders (118) angebracht ist und sich zumindest teilweise durch den Kolben (116) erstreckt, wobei die Zentrierstange (142) neu positionierbar ist, um die neutrale Traktionsantriebsposition des Kolbens (116) zu ändern.

8. Elektrohydraulischer Aktuator (100) für ein hydrostatisches Getriebe (102) nach Anspruch 1, wobei der elektrohydraulische Aktuator (100) modular und an einer Außenfläche eines Getriebegehäuses angebracht ist.

## Revendications

1. Actionneur électrohydraulique (100) pour une transmission hydrostatique (102), comprenant :
un piston (116) dans un cylindre (118) ;
une soupape de régulation de pression de marche avant (112) sensible à un mouvement d'une pédale de marche avant (104) pour ouvrir de manière variable un passage de marche avant (162) afin de fournir de la pression hydraulique sur un premier côté du piston (116) ;
une soupape de régulation de pression de marche arrière (114) sensible à un mouvement d'une pédale de marche arrière (106) pour ouvrir de manière variable un passage de marche arrière (164) afin de fournir de la pression hydraulique sur un deuxième côté du piston (116) ; et
un capteur de position de pédale (108) fournissant des signaux électriques à un contrôleur électronique (110) qui actionne sélectivement la paire de soupapes de régulation de pression (112, 114) ;
**caractérisé par** une tige de piston (120) entre le piston (116) et un joint (124) ; le joint (124) étant connecté à un levier de tourillon (126) sur la transmission hydrostatique (102) qui tourne vers une position de conduite à traction avant si le piston (116) coulisse dans une première direction depuis la position de conduite à traction neutre, et une position de conduite à traction arrière si le piston (116) coulisse dans une deuxième direction depuis la position de conduite à traction neutre, et un ressort de centrage (130) poussant le piston (116) dans une position de conduite à traction neutre dans le cylindre (118).

2. Actionneur électrohydraulique (100) pour une transmission hydrostatique (102) selon la revendication 1, l'actionneur électrohydraulique (100) étant connecté à un circuit hydraulique d'équipement.

3. Actionneur êlectrohydraulique (100) pour une transmission hydrostatique (102) selon la revendication 1, le contrôleur électronique (110) fournissant des signaux électriques aux soupapes de régulation de pression de marche avant et de marche arrière (112, 114) sur la base au moins en partie d'une position de pédale.

4. Actionneur électrohydraulique (100) pour une transmission hydrostatique (102) selon la revendication 3, dans lequel les signaux électriques pour les soupapes de régulation de pression de marche avant et de marche arrière (112, 114) sont basés au moins en partie sur un réglage dans le contrôleur (110) pour la vitesse, la puissance ou l'accélération.

5. Actionneur électrohydraulique (100) pour une transmission hydrostatique (102) selon la revendication 3, dans lequel les signaux électriques pour les soupapes de régulation de pression de marche avant et de marche arrière (112, 114) sont basés au moins en partie sur un verrouillage dans le contrôleur (110) qui empêche tout mouvement du tracteur sous certaines conditions.

6. Actionneur électrohydraulique (100) pour une transmission hydrostatique (102) selon la revendication 1, dans lequel le ressort de centrage (130) se trouve à l'intérieur d'un alésage (132) du piston (116).

7. Actionneur électrohydraulique (100) pour une transmission hydrostatique (102) selon la revendication 1, comprenant en outre une tige centrale (142) attachée à une extrémité du cylindre (118) et s'étendant au moins en partie à travers le piston (116) ; la tige centrale (142) étant repositionnable pour changer la position de conduite à traction neutre du piston (116).

8. Actionneur électrohydraulique (100) pour une transmission hydrostatique (102) selon la revendication 1, l'actionneur électrohydraulique (100) étant modulaire et attaché à une surface extérieure d'un carter de transmission.
